# EUROPÄISCHE PATENTSCHRIFT

(11) **EP 1 805 952 B1**
(45) Veröffentlichungstag und Bekanntmachung des Hinweises auf die Patenterteilung: **23.04.2008**
(21) Anmeldenummer: 05789621.9
(22) Anmeldetag: 30.08.2005
(51) Int. Cl.: H04L 12/56, H04L 29/06

(54) **VERFAHREN ZUR ÜBERMITTLUNG VON IN FORM VON DATENPAKETEN ZUR VERFÜGUNG STEHENDEN DATEN**
METHOD FOR THE TRANSMISSION OF DATA AVAILABLE IN THE FORM OF DATA PACKETS
PROCEDE POUR TRANSMETTRE DES DONNEES QUI SONT DISPONIBLES SOUS FORME DE PAQUETS DE DONNEES

(30) Priorität: 29.10.2004 DE 102004052692
(43) Veröffentlichungstag der Anmeldung: 11.07.2007
(73) Patentinhaber: Siemens Enterprise Communications GmbH & Co. KG, 81379 München (DE)
(72) Erfinder: BAMMESREITER, Birgit, 85435 Erding (DE); ENTLER, Wolfgang, A-1220 Wien (AT); WENNINGER, Klaus, A-2700 Wiener Neustadt (AT)
(74) Vertreter: Maier, Daniel Oliver
(86) Internationale Anmeldenummer: PCT/EP2005/054249
(87) Internationale Veröffentlichungsnummer: WO 2006/045659

(56) Entgegenhaltungen:
- EP-A- 1 202 508
- EP-A- 1 303 083
- US-B1- 6 650 652
- US-B1- 6 778 495

## Beschreibung

Die vorliegende Erfindung betrifft ein Verfahren zur Übermittlung von in Form von Datenpaketen zur Verfügung stehenden Daten bei dem für die Übermittlung mehrere Übermittlungsstrecken zur Verfügung stehen und den Übermittlungsstrecken jeweils eine Versendeeinheit zur Zwischenspeicherung von über die jeweilige Übermittlungsstrecke zu übermittelnden Daten zugeordnet ist.

Um eine korrekte Übermittlung von Daten - beispielsweise innerhalb einer vorgegebenen Echtzeitanforderung - gewährleisten zu können, werden den zu übermittelnden Daten häufig unterschiedliche Service- oder Prioritätsklassen zugeordnet. Hierbei werden niedrig-priore Daten nur dann über eine Übertragungsstrecke - in der Literatur häufig als "Link" bezeichnet - übermittelt, wenn keine höher-prioren Daten zur Übermittlung vorliegen. Dies führt in einigen Fällen dazu, dass niedrig-priore Daten einen Link für eine gewisse Zeit blockieren, da die höher-prioren Daten zum Zeitpunkt der Entscheidung über die Versendung der nieder-prioren Daten noch nicht für eine Übermittlung zur Verfügung standen.

Dieser Umstand führt insbesondere bei Links mit einer geringen Datenübertragungsrate, beispielsweise bei ISDN-Nutzdatenkanälen (Integrated Services Digital Network) oder bei langsamen "uplinks" von ADSL-Verbindungen (Asymmetrical Digital Subscriber Line), zu inakzeptablen Verzögerungszeiten - in der Literatur als "Delay" bezeichnet - bei den höher-prioren Daten.

Ein bekannter Lösungsansatz um den Delay zu reduzieren, besteht in der Verwendung eines Datenübertragungsprotokolls, welches eine Fragmentierung der zu übermittelnden Daten beim Sender und eine Defragmentierung der übermittelten Daten beim Empfänger zur Verfügung stellt. Ein bekanntes Protokoll welches eine derartige Fragmentierung bzw. Defragmentierung erlaubt, ist das für eine Datenübermittlung in Rechnernetzwerken bekannte paket-orientierte IP-Protokoll (Internet Protocol), oder das ML-PPP-Protokoll (Multilink Point to Point Protocol). Hierbei werden die zu übermittelnden Daten vor dem Versenden fragmentiert und erst anschließend auf Basis der Fragmente priorisiert. Das hat zur Folge, dass die maximale Blockierzeit auf die Übertragungsdauer eines Fragmentes begrenzt ist.

Üblicherweise wird dabei ein zu übermittelndes Datenpaket in so viele Fragmente aufgeteilt, wie Links zur Verfügung stehen. Dies bewirkt, dass der Delay für jedes einzelne Datenpaket minimiert wird, jedoch wird häufig unnötig stark fragmentiert, so dass unnötig Overhead-Daten für die Fragmentverwaltung generiert werden und dadurch Verwaltungsressourcen unnötig belegt werden. Des Weiteren kann das Problem auftreten, dass insbesondere bei nur wenigen zur Verfügung stehenden Links die Fragmentierung nicht stark genug ist, so dass der Delay weiterhin einen gewünschten Grenzwert überschreitet.

In der US 6 778 495 B1 ist ein Verfahren und ein Vorrichtung zur Übertragung von Datenpaketen beschrieben, bei dem "best effort" bzw. nicht-echtzeitkritische Datenpakete fragmentiert und über zwei Communication Links übertragen werden. Als Schedulingverfahren für die Lastverteilung in den Links ist eine Round Robinverfahren vorgesehen.

In der EP 1 303 083 A1 ist ein Paket Scheduler beschrieben, bei dem Sprach- oder Videodatenpakete einem hochwertigen Verkehr und niedrig priore Datenpakete einem niedrig prioren Verkehr zugeordnet werden. In einem Paketbuffer ist jeweils eine Queue für niedrig prioren und hochwertigen Verkehr vorgesehen und die empfangenen Datenpakete werden entsprechend einsortiert. Die niedrig prioren Datenpakete können in der Queue für niedrig prioren Verkehr in Abhängigkeit von den zu übermittelnden hochprioren Datenpaketen noch geteilt werden.

In der EP 1 202 508 A1 ist ein Verfahren und eine Vorrichtung beschrieben, bei dem NDSI (non delay sensitive Information) fragmentiert werden, wobei die Fragmentierung in Abhängigkeit von Parametern erfolgt, die in der empfangenen DSI (delay sensitive information) enthalten sind. Die Parameter sind Variable wie Abtastrate, Informationskompression, Umfang der Overheadinformation, Anzahl der Känale. NDSI und DSI werden über einen einzigen Communication Link übertragen

Der Erfindung liegt somit die Aufgabe zugrunde, ein Verfahren und eine Sendeeinheit anzugeben, durch welche eine an die vorliegenden Übertragungsbedingungen angepasste Übermittlung von Daten erreicht werden kann.

Eine Lösung der Aufgabe erfolgt bezüglich eines Verfahrens ausgehend vom Oberbegriff des unabhängigen Patentanspruchs 1 durch dessen kennzeichnende Merkmale und bezüglich einer Sendeeinheit durch die Merkmale des Patentanspruchs 11.

Das erfindungsgemäße Verfahren basiert auf einem System, bei dem für die Übermittlung mehrere Übermittlungsstrecken zur Verfügung stehen und den Übermittlungsstrecken jeweils eine Versendeeinheit - in der Literatur häufig als Queue bezeichnet - zur Zwischenspeicherung von über die jeweilige Übermittlungsstrecke zu übermittelnden Daten zugeordnet ist.

Erfindungsgemäß werden dabei nicht-echtzeitkritische Daten enthaltene Datenpakete vor der Weiterleitung an eine Versendeeinheit in Fragmente mit variabler Fragmentgröße aufgeteilt und die Fragmentgröße und die Aufteilung auf die Übermittlungsstrecken abhängig von einer aktuell in der Versendeeinheit gespeicherten Datenmenge, und einer auf der entsprechenden Übermittlungsstrecke zur Verfügung stehenden Datenübertragungsrate, ausgewählt. Vorteilhafterweise werden die echtzeit-kritische Daten enthaltenen Datenpakete ohne Fragmentierung an eine Versendeeinheit weitergeleitet.

Ein wesentlicher Vorteil der Erfindung besteht darin, dass das erfindungsgemäße Verfahren auf einfache Weise in bereits bestehende Systeme implementiert werden kann und mit bestehenden Übermittlungsstandards kompatibel ist.

Vorteilhafte Weiterbildungen der Erfindung sind in den Unteransprüchen angegeben.

Gemäß einer Ausgestaltung der vorliegenden Erfindung wird die Fragmentgröße und die Aufteilung auf die Übermittlungsstrecken zusätzlich unter Berücksichtigung einer einstellbaren maximalen Wartezeit zwischen der Einspeicherung der Daten in der Versendeeinheit und einer Übermittlung über die entsprechende Übermittlungsstrecke gewählt. Die Fragmentgröße wird dabei derart eingestellt, dass für die zu übermittelnden Daten ein konfigurierbarer Delay nicht überschritten wird.

Vorteilhafterweise kann eine minimale Fragmentgröße festgelegt werden. Auf diese Weise werden bei Nicht-Vorhandensein von zu übermittelnden echtzeit-kritischen Daten unnötige Overhead-Daten für die Fragmentverwaltung auf einfache Weise verhindert.

Gemäß einer weiteren Ausgestaltung der vorliegenden Erfindung erfolgt eine Übermittlung von echtzeit-kritischen Daten nur über bestimmte Übertragungsstrecken. Auf diese Weise besteht die Möglichkeit, die Wartezeit auf den restlichen, die nichtechtzeitkritischen Daten übermittelnden Übertragungsstrecken anzuheben. Dies verhindert ebenfalls die Generierung von Overhead-Daten für die Fragmentverwaltung und spart somit zusätzlich auch Verarbeitungsressourcen. Dies ermöglicht wiederum den Einsatz von kostengünstigeren Steuereinheiten (Prozessoren) mit vergleichbar geringerer Verarbeitungsleistung.

Ein Ausführungsbeispiel der Erfindung wird im Folgenden anhand der Zeichnung näher erläutert.

Dabei zeigt:

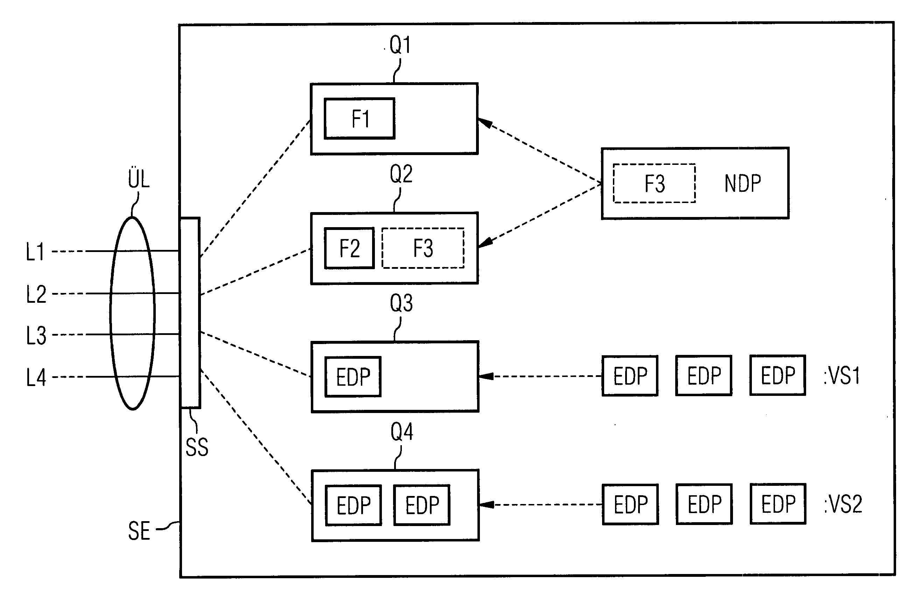

- Fig. 1:: ein Strukturbild zur schematischen Darstellung der am erfindungsgemäßen Verfahren beteiligten wesentlichen Funktionseinheiten.

Fig. 1 zeigt eine erfindungsgemäße Sendeeinheit SE an die über eine Schnittstelle SS eine Übertragungsleitung ÜL angeschlossen ist. Die Übertragungsleitung ÜL umfasst eine Mehrzahl von Übermittlungsstrecken, wobei im vorliegenden Ausführungsbeispiel vier Übermittlungsstrecken L1,...,L4 dargestellt sind. Bei den Übermittlungsstrecken L1,...,L4 handelt es sich beispielsweise um ISDN-Nutzdatenkanäle - in der Literatur häufig auch als B-Kanäle bezeichnet - mit einer jeweiligen Übertragungsrate von 64 kBit pro Sekunde. Jeder Übermittlungsstrecke L1,...,L4 ist eine Versendeeinheit Q1,...,Q4 zugeordnet, in denen über die entsprechende Übermittlungsstrecke L1,...,L4 zu übertragende Daten zwischengespeichert werden. Die in einer Versendeeinheit Q1,...,Q4 zwischengespeicherten Daten sind für eine baldmöglichste Übermittlung über die entsprechende Übermittlungsstrecke L1,...,L4 vorgesehen, wobei die Übermittlung nicht mehr verzögert werden kann. Zur besseren Verständlichkeit werden die Versendeeinheiten Q1,...,Q4 im Folgenden - wie in der Literatur üblich - als Queues Q1,...,Q4 bezeichnet.

Die über die Übertragungsleitung ÜL zu übermittelnden Daten liegen in der Sendeeinheit SE in Form von Datenpaketen vor. Hierbei wird unterschieden zwischen ersten Datenpaketen NDP, die nicht-echtzeitkritische Daten enthalten und zweiten Datenpaketen EDP, die echtzeitkritische Daten enthalten. Im vorliegenden Ausführungsbeispiel ist ein erstes Datenpaket NDP und mehrere zweite Datenpakete EDP dargestellt, wobei drei zweite Datenpakete EDP einer ersten Sprachverbindung VS1 - in der Literatur häufig als Voice Stream bezeichnet - und drei weitere zweite Datenpakete EDP einer zweiten Sprachverbindung VS2 zugeordnet sind.

Die ersten und zweiten Datenpakete NDP, EDP werden für eine Übermittlung über die Übertragungsleitung ÜL nach dem im Folgenden beschriebenen Verfahren auf die Queues Q1,...,Q4 aufgeteilt.

Die zweiten Datenpakete EDP der ersten Sprachverbindung VS1 werden vor der Übermittlung über die dritte Übermittlungsstrecke L3 in der dritten Queue Q3 zwischengespeichert. Die zweiten Datenpakete EDP der zweiten Sprachverbindung VS2 werden vor der Übermittlung über die vierte Übermittlungsstrecke L4 in der vierten Queue Q4 zwischengespeichert. Das erste Datenpaket NDP kann für eine Übertragung über die Übertragungsleitung ÜL sowohl in der ersten als auch in der zweiten Queue Q1, Q2 zwischengespeichert werden. Hierfür wird das erste Datenpaket NDP in Fragmente F variabler Größe untergliedert, wobei die Fragmentgröße von der jeweiligen Queue Q1, Q2 abhängig ist. Bei der Aufteilung des ersten Datenpaketes NDP auf die Queues Q1, Q2 wird für das nächste Fragment F dabei diejenige Queue Q1, Q2 gewählt, die für das nächste Fragment am geeignetsten erscheint. Das ist in der Regel diejenige Queue Q1, Q2 mit der kürzesten so genannten "Versende-Queue".

Im vorliegenden Ausführungsbeispiel ist in der ersten Queue Q1 bereits ein ersten Fragment F1 und in der zweiten Queue Q2 ein zweites Fragment F2 zwischengespeichert, wobei das erste Fragment F1 größer ist, als das zweite Fragment F2, d.h. die aktuell in der ersten Queue Q1 zwischengespeicherte und für eine Übertragung über die erste Übermittlungsstrecke L1 freigegebene Datenmenge ist größer als die in der zweiten Queue Q2 zwischengespeicherte und für eine Übertragung über die zweite Übermittlungsstrecke L2 freigegebene Datenmenge. Beispielsweise weist das erste Fragment F1 eine Größe von 80 Byte und das zweite Fragment F2 eine Größe von 40 Byte auf.

Wie bereits oben ausgeführt weisen die Übermittlungsstrecken L1,...,L4 jeweils eine Übertragungsrate von 64 kBit pro Sekunde auf. Geht man davon aus, dass die maximale Verzögerungszeit für ein zweites, echtzeit- kritische Daten enthaltenes, Datenpaket 20 ms beträgt, beträgt die maximale in einer Queue Q1,...,Q4 zwischenzuspeichernde Datenmenge 160 Byte. Diese maximal in einer Queue Q1,...,Q4 zwischenzuspeichernde Datenmenge wird häufig als "Queue-Limit" bezeichnet. Das Queue-Limit ist dabei abhängig von den für die Übertragung verwendeten Codecs, der notwendigen Übertragungsqualität, usw.

Im vorliegenden Ausführungsbeispiel könnte somit in der ersten Queue Q1 ein Fragment F mit einer Größe von 80 Byte und in der zweiten Queue Q2 ein Fragment F mit einer Größe von 120 Byte zwischengespeichert werden. Folglich ist die zweite Queue Q2 für das nächste Fragment F die geeignetere Queue, so dass aus dem ersten Datenpaket NDP ein drittes Fragment F3 mit einer Größe von 120 Byte gebildet und in der zweiten Queue Q2 zwischengespeichert wird.

Bekannte Protokolle, welche eine Fragmentierung von Datenpaketen erlauben, sind das für eine Datenübermittlung in Rechnernetzwerken bekannte paket-orientierte IP-Protokoll (Internet Protocol) oder das ML-PPP-Protokoll (Multilink Point to Point Protocol). Im Falle einer Verwendung des IP- Protokolls werden als zweite Datenpakete EDP sogenannte RTP- Datenpakete (Realtime Transport Protocol) verwendet. Eine Fragmentierung auf Basis des IP- Protokolls führt im Gegensatz zu einer Fragmentierung auf Basis des ML-PPP-Protokoll zu einem größeren Paket- Header, so dass die Verarbeitung aufwendiger ist.

Durch eine feste Zuordnung von einer Sprachverbindung VS1, VS2 zugeordneten zweiten Datenpaketen EDP zu einer Queue Q3, Q4 besteht zum einen aufgrund der innerhalb einer Sprachverbindung eingehaltenen Reihenfolge die Möglichkeit bei einer Verwendung des ML-PPP-Protokolls die echtzeit-kritischen Daten ohne Header zu übermitteln, so dass der Fragmentierungs-Overhead gesenkt und Verarbeitungskapazität gespart wird. Zum anderen können bei einer Verwendung des IP- Protokolls Kompressionsverfahren eingesetzt werden, die eine Redundanz in aufeinanderfolgenden Headern - insbesondere in RTP- Headern - nutzen.

Des Weiteren können Queues nur für eine Übermittlung von ersten Datenpaketen NDP reserviert werden. Da für diese Queues das für eine Übermittlung von echtzeit-kritischen Daten vorgesehene Queue-Limit nicht eingehalten werden muss, kann das Queue-Limit angehoben werden. Dies führt zu einer weiteren Reduzierung des Fragmentierungs- Overheads und zu einer Einsparung von Verarbeitungskapazität.

## Patentansprüche

1. Verfahren zur Übermittlung von in Form von Datenpaketen (NDP, EDP) zur Verfügung stehenden Daten,
bei dem für die Übermittlung mehrere Übermittlungsstrecken (L1,...,L4) zur Verfügung stehen und den Übermittlungsstrecken (L1,...,L4) jeweils eine Versendeeinheit (Q1,...,Q4) zur Zwischenspeicherung von über die jeweilige Übermittlungsstrecke (L1,...,L4) zu übermittelnden Daten zugeordnet ist,
**dadurch gekennzeichnet,**
**dass** nicht-echtzeitkritische Daten enthaltene erste Datenpakete (NDP) vor der Weiterleitung an eine Versendeeinheit (Q1,...,Q4) in Fragmente mit variabler Fragmentgröße aufgeteilt werden, und
**dass** die Fragmentgröße und die Aufteilung auf die Übermittlungsstrecken (L1,...L4) abhängig von
- einer aktuell in der Versendeeinheit (Q1,...,Q4) gespeicherten Datenmenge, und
- einer auf der entsprechenden Übermittlungsstrecke (L1,..., L4) zur Verfügung stehenden Datenübertragungsrate, ausgewählt werden.

2. Verfahren nach Anspruch 1,
**dadurch gekennzeichnet,**
**dass** echtzeitkritische Daten enthaltene zweite Datenpakete (EDP) ohne Fragmentierung an eine Versendeeinheit (Q1,...,Q4) weitergeleitet werden.

3. Verfahren nach Anspruch 1 oder 2,
**dadurch gekennzeichnet,**
**dass** die Fragmentgröße Versendeeinheit-spezifisch gewählt wird.

4. Verfahren nach einem der vorhergehenden Ansprüche,
**dadurch gekennzeichnet,**
**dass** die Fragmentgröße und die Aufteilung auf die Übermittlungsstrecken (L1,...L4) zusätzlich unter Berücksichtigung einer einstellbaren maximalen Wartezeit zwischen der Einspeicherung der Daten in der Versendeeinheit (Q1,...,Q4) und einer Übermittlung über die Übermittlungsstrecke (L1,...,L4) gewählt wird.

5. Verfahren nach einem der vorhergehenden Ansprüche,
**dadurch gekennzeichnet,**
**dass** eine minimale Fragmentgröße vorgebbar ist.

6. Verfahren nach einem der vorhergehenden Ansprüche,
**dadurch gekennzeichnet,**
**dass** einzelne Übermittlungsstrecken (L3, L4) für eine Übermittlung von echtzeit-kritischen Daten reserviert werden.

7. Verfahren nach einem der vorhergehenden Ansprüche,
**dadurch gekennzeichnet,**
**dass** die Wartezeit bei denjenigen Übermittlungsstrecken (L1, L2), über die keine echtzeit-kritischen Daten übermittelt werden, angehoben wird.

8. Verfahren nach einem der vorhergehenden Ansprüche,
**dadurch gekennzeichnet,**
**dass** die ersten Datenpakete (NDP) gemäß dem IP-Protokoll ausgestaltet sind.

9. Verfahren nach einem der vorhergehenden Ansprüche,
**dadurch gekennzeichnet,**
**dass** die zweiten Datenpakete (EDP) gemäß dem RTP-Protokoll ausgestaltet sind.

10. Verfahren nach einem Ansprüche 1 bis 7,
**dadurch gekennzeichnet,**
**dass** die ersten und zweiten Datenpakete (NDP, EDP) gemäß dem ML-PPP-Protokoll ausgestaltet sind.

11. Sendeeinheit (SE) zur Durchführung eines der Verfahren nach einem der vorhergehenden Ansprüche 1 - 8.

## Claims

1. Method for transmitting data that is available in the form of data packets (NDP, EDP),
wherein a plurality of transmission links (L1,...,L4) are available for transmitting and the transmission links (L1,...,L4) have each been assigned a sending unit (Q1,...,Q4) for buffering data requiring to be transmitted over the respective transmission link (L1,...,L4),
**characterised in that**
first data packets (NDP) containing non-realtime-critical data are divided up into fragments of variable size before being forwarded to a sending unit (Q1,...,Q4), and
that the fragment size and the distribution of the fragments over the transmission links (L1,...,L4) are selected as a function of
- an amount of data currently stored in the sending unit (Q1,...,Q4), and
- a data transmission rate that is available on the corresponding transmission link (L1,...,L4).

2. Method according to claim 1,
**characterised in that**
second data packets (EDP) containing realtime-critical data are forwarded to a sending unit (Q1,...,Q4) without being fragmented.

3. Method according to claim 1 or 2,
**characterised in that**
the fragment size is selected as being specific to the sending unit.

4. Method according to one of the preceding claims,
**characterised in that**
the fragment size and the distribution of the fragments over the transmission links (L1,...,L4) are selected additionally taking into account a settable maximum waiting time between the storing of the data in the sending unit (Q1,...,Q4) and a transmission over the transmission link (L1,...,L4).

5. Method according to one of the preceding claims,
**characterised in that**
a minimum fragment size can be predefined.

6. Method according to one of the preceding claims,
**characterised in that**
individual transmission links (L3, L4) are reserved for transmission of realtime-critical data.

7. Method according to one of the preceding claims,
**characterised in that**
the waiting time is increased for the transmission links (L1, L2) over which no realtime-critical data is transmitted.

8. Method according to one of the preceding claims,
**characterised in that**
the first data packets (NDP) are embodied according to the IP protocol.

9. Method according to one of the preceding claims,
**characterised in that**
the second data packets (EDP) are embodied according to the RTP protocol.

10. Method according to one of claims 1 to 7,
**characterised in that**
the first and second data packets (NDP, EDP) are embodied according to the ML-PPP protocol.

11. Sending unit (SE) for implementing one of the methods according to one of the preceding claims 1 - 8.

## Revendications

1. Procédé de transmission de données disponibles sous la forme de paquets de données (NDP, EDP), dans lequel plusieurs voies de transmission (L1, ..., L4) sont disponibles aux fins de la transmission et respectivement une unité d'envoi (Q1, ..., Q4) est affectée aux voies de transmission (L1, ..., L4) aux fins du stockage intermédiaire de données à transmettre via la voie de transmission respective (L1, ..., L4), **caractérisé en ce que** des premiers paquets de données (NDP) contenant des données non critiques en temps réel sont répartis avant la retransmission à une unité d'envoi (Q1, ..., Q4) en fragments de taille variable et **en ce que** la taille des fragments et la répartition sur les voies de transmission (L1, ..., L4) sont sélectionnées en fonction
- d'une quantité de données stockée actuellement dans l'unité d'envoi (Q1, ..., Q4) et
- d'un débit de transmission de données disponible sur la voie de transmission correspondante (L1, ..., L4).

2. Procédé selon la revendication 1, **caractérisé en ce que** des deuxièmes paquets de données (EDP) contenant des données critiques en temps réel sont retransmis sans fragmentation à une unité d'envoi (Q1, ..., Q4).

3. Procédé selon la revendication 1 ou 2, **caractérisé en ce que** la taille des fragments est choisie spécifiquement pour l'unité d'envoi.

4. Procédé selon l'une des revendications précédentes, **caractérisé en ce que** la taille des fragments et la répartition sur les voies de transmission (L1, ..., L4) sont additionnellement choisies compte tenu d'un temps d'attente maximal réglable entre la mise en mémoire des données dans l'unité d'envoi (Q1, ..., Q4) et une transmission via la voie de transmission (L1, ..., L4).

5. Procédé selon l'une des revendications précédentes, **caractérisé en ce qu'**une taille de fragment minimale est prédéterminable.

6. Procédé selon l'une des revendications précédentes, **caractérisé en ce que** des voies de transmission individuelles (L3, L4) sont réservées pour une transmission de données critiques en temps réel.

7. Procédé selon l'une des revendications précédentes, **caractérisé en ce que** le temps d'attente est majoré dans le cas des voies de transmission (L1, L2) via lesquelles il n'y a pas transmission de données critiques en temps réel.

8. Procédé selon l'une des revendications précédentes, **caractérisé en ce que** les premiers paquets de données (NDP) sont formés selon le protocole IP.

9. Procédé selon l'une des revendications précédentes, **caractérisé en ce que** les deuxièmes paquets de données (EDP) sont formés selon le protocole RTP.

10. Procédé selon l'une des revendications 1 à 7, **caractérisé en ce que** les premiers et deuxièmes paquets de données (NDP, EDP) sont formés selon le protocole ML PPP.

11. Unité d'émission (SE) permettant l'exécution de l'un des procédés selon l'une des revendications précédentes 1 à 8.
